# EUROPEAN PATENT APPLICATION

(11) **EP 4 640 934 A1**
(43) Date of publication of application: **29.10.2025**
(21) Application number: 25172088.4
(22) Date of filing: 23.04.2025
(51) Int. Cl.: D03D 25/00, D03D 41/00, B29C 70/22, D03D 15/267, D03D 15/275, B29C 70/24

(54) **3D WOVEN PREFORM AND MANUFACTURING METHOD**

(30) Priority: 24.04.2024 US 202418644873
(71) Applicant: RTX Corporation, Farmington, CT 06032 (US)
(72) Inventor: SUDRE, Olivier H., Farmington, 06032 (US); PARIKH, Nil, Farmington, 06032 (US)
(74) Representative: Dehns

(57) **Abstract**

Woven fiber preforms are disclosed which have a base section (210) and one or more leg sections (220a, 220b) positioned the base section (210), The base section (210) and the leg sections (220a, 220b) together are a made of a single three-dimensional woven fiber structure comprising warp and weft fiber tows. The woven structure includes connecting weft tow sections that connect the base section (210) to each of the leg sections (220a, 220b). The connecting weft tow sections include through-the-thickness tow regions that pass from a leg section (220a, 220b) through the thickness (height) of the base section (210).

## Description

### Field of the Invention

The present disclosure relates generally to methods for manufacturing three-dimensional woven fiber structures or preforms. In particular, the present disclosure concerns preparing woven fiber structures or preforms having sections that are angled with respect to one another, for example, pi-shaped structures as used for manufacturing CMC components such as blade outer air seals (BOAS).

### Background

Gas turbine jet engines, in general, include a fan section, a compressor section, a combustion chamber, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

The turbine section includes low and high pressure turbines having a plurality of turbine blades. The turbine section further includes a blade outer air seal (BOAS) to prevent leakage of the high-energy, high temperature gas flow as it flows through the turbine section to thereby increase efficiency of the gas turbine jet engine.

Certain components of gas turbine jet engines are subjected to high temperature environments as a result of the high-energy, high temperature gas flow (flow path components). Therefore, the components are made of heat resistant materials such as ceramic matrix composites (CMCs). CMC components are generally made of woven ceramic fibers shaped into fabric preform structures which are then densified so that the woven ceramic fibers are embedded in/surrounded by ceramic matrix material. These preforms can have two-dimensional or three-dimensional woven structures.

Pi-shapes (π-shaped) are potential shapes for CMC features and components in turbine engine, particularly BOAS. When manufacturing π-shaped structures using individual 2D woven and braided plies, the 2D woven structure is folded to make a leg or rib section that is angled with respect to the base section. This creates a void or cavity at the base of leg/rib between the fillet regions, called the "noodle region." This void can be filled with a particulate material or a filler fiber or "noodle," typically a triangular braided fiber component. However, in the manufacturing process, this noodle region is more difficult to densify and, as a result, lacks strength and reinforcement through the thickness of the structure. This makes the noodle region susceptible to cracking and delamination, which in turn results in the CMC components being susceptible to early failure.

Three-dimensional woven structures are desirable due to ease of manufacture and the strength associated with components made therefrom. However, complex three-dimensional woven structure, wherein sections are manipulated so as to be at angles to one another, can be difficult to form from three-dimensional woven materials. US 6,446,675 describes problems resulting from forming components from three-dimensional woven structures that are woven flat and then folded into their final shape.

There is a continuing need for alternative and/or improved manufacturing methods for obtaining 3D fabric preforms that facilitate the production of CMC components, particularly CMC components for gas turbine jet engines.

### Summary of the Invention

In one exemplary embodiment of the present disclosure, there is provided a fiber preform having:
a base section comprising a bottom surface, a top surface opposite the bottom surface, a first end surface, and a second end surface opposite to the first end surface, the base section having a thickness (or height) defined as the distance between the bottom surface and the top surface and a length defined as the distanced between the first end surface and the second end surface, and
one or more leg sections positioned above the top surface of the base section, wherein each leg section has a first side surface, a second side surface, first end surface, and a second end surface.

In this embodiment, the base section and the one or more leg sections together are a made of a single three-dimensional woven fiber structure comprising layers of warp fiber tows, the warp tows of adjacent layers being arranged generally in columns, e.g., vertical columns, and a plurality of weft fiber tows that interlink the layers of warp tows to provide a three-dimensional weave. The woven fiber structure includes connecting weft tow sections, that connect the base section to each of the one or more leg sections, wherein the connecting weft tow sections include through-the-thickness tow regions that pass from a leg section through the thickness (height) of the base section.

In further embodiments of the present disclosure, including further embodiments of the above exemplary embodiment, each of the one or more leg sections is positioned at an angle (e.g., 90°) with respect to the top surface of the base section with the first end surface of each leg section being positioned adjacent and parallel to the top surface of the base section.

In further embodiments of the present disclosure, including further embodiments of any of the above exemplary embodiments, the preform has two leg sections and each of the leg sections is positioned at an angle (e.g., 90°) with respect to the top surface of the base section with the first end surface of each leg section being positioned adjacent and parallel to the top surface of the base section to form a π-shaped structure.

In further embodiments of the present disclosure, including further embodiments of any of the above exemplary embodiments, the fibers are made from material selected from silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbide (SiBC), silicon borocarbonitride (SiBCN), silicon aluminum carbon nitride (SiAlCN), oxide fibers (e.g., silica, alumina, mullite, garnet and combination thereof), glass, and polymers.

In further embodiments of the present disclosure, including further embodiments of any of the above exemplary embodiments, the fibers are made from silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbide (SiBC), silicon borocarbonitride (SiBCN), and silicon aluminum carbon nitride (SiAlCN), e.g., silicon carbide (SiC).

In one exemplary method embodiment of the present disclosure, there is provided a method involving:
(a) providing a first plurality of adjacent layers of warp fiber tows to form a base section wherein the warp tows of adjacent layers are arranged in columns, and providing a second plurality of adjacent layers of warp tows to form a leg section wherein the warp tows of adjacent layers are arranged in columns,
(b) weaving a plurality of weft fiber tows through the base section and the leg section to form a single three-dimensional woven fiber structure comprising the base section and the leg section,
   wherein the base section comprises a bottom surface, a top surface opposite the bottom surface, a first end surface, and a second end surface opposite to the first end surface, the base section having a thickness defined as the distance between the bottom surface and the top surface and a length defined as the distance between the first end surface and the second end surface,
   wherein the leg section is positioned above the top surface of the base section, wherein the leg section has a first side surface, a second side surface, first end surface, and a second end surface, and
   wherein the three-dimensional woven fiber structure includes connecting weft tow sections, that connect the base section to the leg section, wherein the connecting weft tow sections include through-the-thickness tow regions that pass from a leg section through the thickness (height) of the base section.

In further embodiments of the present disclosure, including further embodiments of the above exemplary method embodiment, the method includes:
in (a) providing a third plurality of adjacent layers of warp tows to form a further leg section wherein the warp tows of adjacent layers are arranged in columns,
in (b) weaving a plurality of weft tows through the third plurality of adjacent layers of warp fibers wherein the single three-dimensional woven fiber structure comprises the base section, the leg section, and the further leg section,
   wherein the further leg section is positioned above the top surface of the base section, and the further leg section has a first side surface, a second side surface, first end surface, and a second end surface, and
   wherein the three-dimensional woven fiber structure includes connecting weft tow sections that connect the base section to the further leg section, wherein the connecting weft tow sections that connect the base section to the further leg section include through-the-thickness tow regions that pass from the further leg section through the thickness (height) of the base section.

In further embodiments of the present disclosure, including further embodiments of any of the above exemplary method embodiments, the leg section is positioned at an angle (e.g., 90°) with respect to the top surface of the base section with the first end surface of the leg section being positioned adjacent and parallel to the top surface of the base section.

In further embodiments of the present disclosure, including further embodiments of any of the above exemplary method embodiments, the leg section and further leg section are positioned at an angle (e.g., 90°) with respect to the top surface of the base section with the first end surface of each of the leg section and the further leg section being positioned adjacent and parallel to the top surface of the base section.

In further embodiments of the present disclosure, including further embodiments of any of the above exemplary method embodiments, slack is removed from the region of attachment between a leg section and the base section by removing slack from the through-the-thickness tow regions.

In further embodiments of the present disclosure, including further embodiments of any of the above exemplary method embodiments, the fibers are made from material selected from silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbide (SiBC), silicon borocarbonitride (SiBCN), silicon aluminum carbon nitride (SiAlCN), oxide fibers (e.g., silica, alumina, mullite, garnet and combination thereof), glass, and polymers.

In further embodiments of the present disclosure, including further embodiments of any of the above exemplary method embodiments, fibers are made from silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbide (SiBC), silicon borocarbonitride (SiBCN), and silicon aluminum carbon nitride (SiAlCN), e.g., silicon carbide (SiC).

In a further method embodiment of the present disclosure, there is provided a method of preparing ceramic matrix composite (CMC) comprising:
(a) forming a ceramic matrix composite preform by:
   (i) providing a first plurality of adjacent layers of warp tows to form a base section wherein the warp tows of adjacent layers are arranged in columns, and providing a second plurality of adjacent layers of warp tows to form a leg section wherein the warp tows of adjacent layers are arranged in columns,
   (ii) weaving a plurality of weft tows through the through the base section and the leg section to form a single three-dimensional woven fiber structure comprising the base section and the leg section,
      wherein the base section comprises a bottom surface, a top surface opposite the bottom surface, a first end surface, and a second end surface opposite to the first end surface, the base section having a thickness defined as the distance between the bottom surface and the top surface and a length defined as the distance between the first end surface and the second end surface,
      wherein the leg section is positioned above the top surface of the base section, wherein the leg section has a first side surface, a second side surface, first end surface, and a second end surface, and
      wherein the three-dimensional woven fiber structure includes connecting weft tow sections, that connect the base section to the leg section, wherein the connecting weft tow sections include through-the-thickness tow regions that pass from a leg section through the thickness (height) of the base section;
(b) positioning the leg section of the preform to be at an angle (e.g., 90°) with respect to the top surface of the base section wherein the first end surface of the leg section is positioned adjacent and parallel to the top surface of the base section;
(c) removing slack within the through-the-thickness tow regions; and
(d) densifying the preform to form the ceramic matrix composite.

In further embodiments of the present disclosure, including further embodiments of any of the above exemplary method embodiment, the method further involves:
in (i) providing a third plurality of adjacent layers of warp tows to form a further leg section wherein the warp tows of adjacent layers are arranged in columns,
in (ii) weaving a plurality of weft tows through the third plurality of adjacent layers of warp tows wherein the single three-dimensional woven fiber structure comprises the base section, the leg section, and the further leg section,
   wherein the further leg section is positioned above the top surface of the base section, and the further leg section has a first side surface, a second side surface, first end surface, and a second end surface, and
   wherein the three-dimensional woven fiber structure includes connecting weft tow sections that connect the base section to the further leg section, wherein the connecting weft tow sections that connect the base section to the further leg section include through-the-thickness tow regions that pass from the further leg section through the thickness (height) of the base section.

In further embodiments of the present disclosure, including further embodiments of any of the above exemplary method embodiment, the fibers are made from material selected from silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbide (SiBC), silicon borocarbonitride (SiBCN), silicon aluminum carbon nitride (SiAlCN), oxide fibers (e.g., silica, alumina, mullite, garnet and combination thereof), glass, and polymers.

Further embodiments off the p[resent disclosure include a ceramic matrix composite prepared by any of the above mentioned method embodiments,

### Brief Description of the Drawings

Implementations of the inventive concepts disclosed herein may be better understood when consideration is given to the following detailed description thereof. These drawings are not necessarily to scale, and which some features may be exaggerated and some features may be omitted or may be represented schematically in the interest of clarity. Like reference numerals in the drawings may represent and refer to the same or similar element, feature, or function. In the drawings:
Fig. 1 schematically illustrates an example gas turbine jet engine.
Fig. 2 illustrates a blade outer air seal (BOAS) segment having a π-shape.
Fig. 3 illustrate a diagrammatic cross sectional view of a preform according to the present disclosure before the legs are folded into position to form the π-shape.
Fig. 4 illustrate a view of the preform of Fig. 3 after the legs are folded into position to form the π-shape,.

### Detailed Description

Broadly, embodiments of the inventive concepts disclosed herein are directed to providing 3D woven structures, particularly for complex preforms such as T-shaped and π-shape structures, that exhibit improved strength and thermal conductivity.

While the following description often refers to woven ceramic composite preforms, it should be understood that the subject matter is not limited thereto. Thus, the fiber structures can be made from carbon fibers, glass fibers, polymer fibers, etc., and the composites can, for example, be ceramic matrix composites and polymer matrix composites.

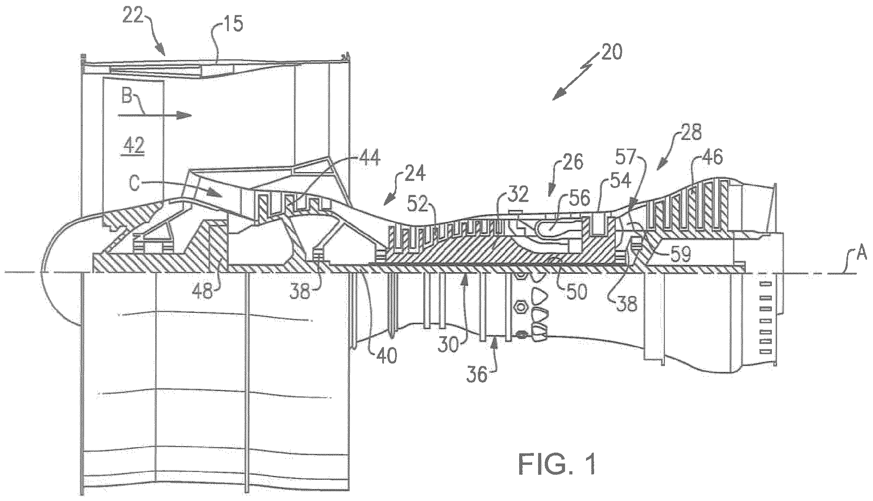

Fig. 1 schematically illustrates an example of a gas turbine jet engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine jet engine, it should be understood that the concepts described herein are not limited to use with two-spool turbofans engines and may be applied to other types of turbine jet engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high pressure compressor 52. Thereafter, the core air flow is mixed and burned with fuel in combustor 56, then expanded in high pressure turbine 54 and low pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The turbine section 28 includes a blade outer air seal (BOAS). Generally, the blade outer air seal is made up of a plurality of BOAS segments that form an annular shaped shroud around the engine central longitudinal axis A. Each of the BOAS segments has a π-shaped structure with two legs extending perpendicularly from a base.

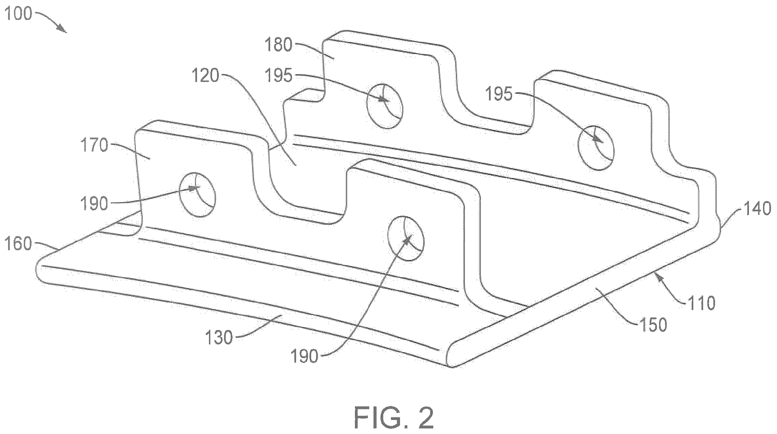

Fig. 2 illustrates an example of a BOAS segment 100 which includes a base having a radially inward surface 110 and a radially outward surface 120. The segment 100 further includes a forward edge 130, an aft edge 140, a first circumferential edge 150, and a second circumferential edge 160. Extending perpendicular to radially outward surface 120 are a forward rail 170 and an aft rail 180. Forward rail 170 defines one or more forward pin orifices 190 and aft rail 180 defines one or more aft pin orifices 195. Forward pin orifices 190 and aft pin orifices 195 extend completely through forward rail 170 and aft rail 180, respectively. The pin orifices 190 and 195 provide means for attaching the segment 100 to a supporting structure. As can be seen, rails 170 and 180 form a π-shape with the base of segment 100.

BOAS segment can have a variety of different structures. Fig 2 is merely intended to provide an example of a BOAS segment and is not to be considered limiting of the present disclosure.

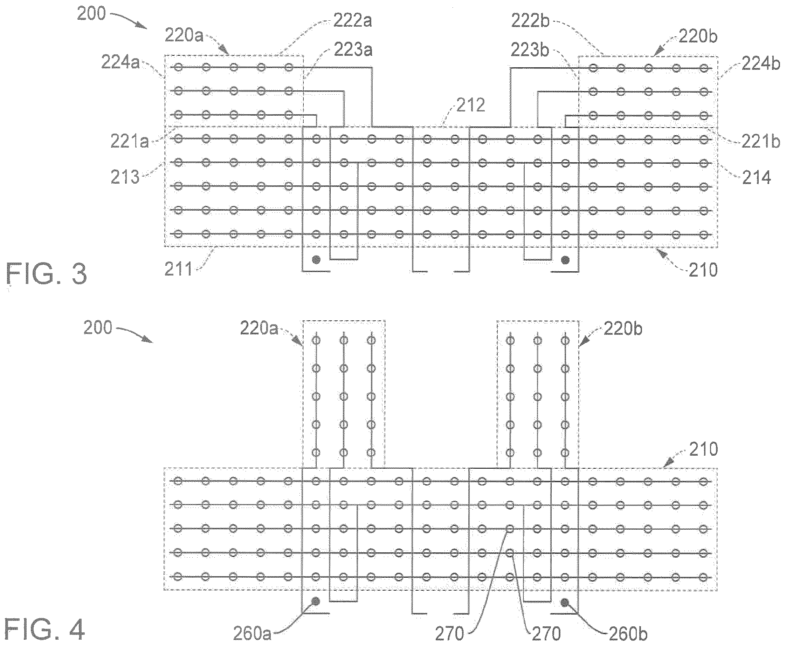

Fig. 3 illustrates a diagrammatic cross section of 3D woven fabric preform 200 for forming a π-shape component such as a BOAS segment. In Fig. 3, the warp fibers are represented as dots and are perpendicular to the viewing plane. The weft fibers are shown in the viewing plan and are represented as horizontal lines between the dots (warp fibers). The base section and leg sections together are made of a single three-dimensional woven fiber structure, for example, woven by means of a Jacquard loom. Because the three-dimensional structure can be manufactured by a loom, the costs associated with 3D woven fabric preforms are reduced compared to manufacturing processes that involve a layup process where the preform is built by layering up 2D fabric sections of weft and warp fibers.

In Fig. 3, the warp fibers are arranged in layers with the warp fibers of adjacent layers being arranged in vertical columns. However, the warp fibers need not be in true vertical columns in the actual preform. In the loom, due to the weaving process, the warp fibers may be arranged to form substantially vertical columns, when viewed from a cross section. However, these columns can be shifter so that they are not strictly vertical. Additionally, it is also possible to arrange the warp fibers in more complex patterns.

Since the fibers are woven in a 3D pattern, the depiction in Fig. 3 is a simplification of the 3D weaving used in the preform. It is to be understood the weft fibers follow sinuous paths and that interlink warp fibers of different layers. It should be understood that various 3D or multiple-layer weaves may be used in the base section and the leg sections. In general, in the 3D weave the positions of the weft tows will change from section to section with some repeating unit. Also, the warp tows are not necessarily straight and they may weave through the architecture in a more complex manner. In Figs. 3 and 4, the representation of the weave is a simplification of the overall fiber architecture so as to facilitate description of the through-the-thickness tow regions, discussed below.

As used herein "fiber" is intended to mean a fiber tow or yarn, i.e., a plurality of fibers formed into a bundle. In these bundles or tows, individual strands may straight or twisted/braided together. These tows can be made various materials including silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbide (SiBC), silicon borocarbonitride (SiBCN), silicon aluminum carbon nitride (SiAlCN), and oxide fibers (e.g., silica, alumina, mullite, garnet and combination thereof),. The tows can also be made of, for example, glass or polymer fibers.

The preform 200 embodiment shown in Fig. 3 has a base section 210 and two leg sections 220a, 220b. Dashed lines are shown around each of the leg sections and the base section to represent boundaries of these elements. The base section has a bottom surface 211, a top surface 212 opposite the bottom surface, a first end surface 213, and a second end surface 214 opposite to the first end surface. The base section has a thickness/height (in the vertical direction of Fig. 3) which is defined as the distance between the bottom surface 211 and the top surface 212 (determined by the number of warp tow layers) and a length (in the horizontal direction of Fig. 3) which is defined as the distanced between the first end surface 213 and the second end surface 214.

In Fig. 3, each leg section is positioned above the top surface 212 of the base section. Each leg section has a first side surface 221a, 221b, a second side surface 222a, 222b, a first end surface 223a, 223b, and a second end surface 224a, 224b. The leg sections and the base section can have the similar or different thicknesses. For example, the base section can have a greater number of warp fiber layers then the leg sections, as shown in Fig. 3.

As diagrammatically shown in Fig. 3, the weft tows include sections that connect the leg sections to the base section. Connecting sections of the weft tows pass from the base section 210, through the top surface 212 of the base section 210, through the first end surfaces 223a, 223b of each of the two leg sections 220a and 220b, and into leg sections 220a and 220b. Additionally, connecting sections of the weft tows pass from each of the leg sections220a and 220b, through each of the first end surfaces 223a, 223b, into the through the top surface 212 of the base section, and into the base section 210. These connecting sections are shown in simplified form as solid lines. Additionally, as shown, these connecting sections include through-the-thickness tow regions that pass through the height of the base section and through the bottom surface 211 of base section 210 Further, it is to be understood that the 3D weave does not connect first side surfaces 221a, 221b of the two leg sections with the top surface 212 of the base section in such a manner that would prevent movement of the two leg sections into position to form a π-shaped structure.

By way of example, weft tows of the 3D weaving can extend from the first end surface 213 of base section 210, through a portion the length of the of base section 210, and then through the top surface 212 of the base section 210. These weft tows can then continue and pass through first end surface 223a of leg section 220a as part of the weft tow connecting sections that connect base section 210 and leg section 220a. Thereafter, the connecting sections of the weft tows can pass through leg section 220a, through second end surface 224a, back through second end surface 224a (at a different location), back through leg section 220a, through first end surface 223a, through the top surface 212 and into base section 210.

The connecting sections weft tows can then continue through the height of the base section 210, forming the through-the-thickness tow regions, and pass through the bottom surface 211 of the base section 210. Thereafter, the weft tows can return to the base section and, for example, pass through the remaining length of the base section 210 or a portion thereof. Alternatively, the weft tows can then return to the base section and pass through a portion the base section 210 thereof before then passing through leg section 220b in a similar manner as described for passage through leg section 220a, although in the opposite direction.

As shown in Fig. 3, the through-the-thickness tow can exhibit various patterns as they pass through the thickness of the base section. For example, the through-the-thickness tow regions may follow a general vertical pathway through the base section corresponding to generally vertical columns of the warp fibers. Alternatively, the through-the-thickness tow regions may diverge from a general vertical pathway.

Fig. 4 shows the preform 200 with the two legs moved into position to form a π-shaped structure, i.e., the leg sections are positioned perpendicular to the top surface of the base section. While Fig. 4 shows the legs positioned at a 90° angle with respect to the base, it should be recognized that the legs could be positioned at any desired angle, e.g., an angle greater than 0 and up to 90°, such as 30° to 90°or 45° to 90° or 60° to 90°. In particular, the first end surfaces the two leg sections are positioned so as to be adjacent and parallel to the top surface of the base section. Also, as can be seen from Fig. 4, weft tow connecting sections, including through-the-thickness tow regions, do not necessarily flow a general vertical pathway as they transition from the leg section into the base section. In other words, weft tow connecting sections, for example, follow a generally vertical pathway corresponding to generally vertical columns of the warp tows, as they transition between the two section and pass through the height of the base section. Alternatively, they make follow a paths that passes through more than one generally vertical column.

Once the leg sections are in position to form the π-shape, the through-the-thickness tows can be adjusted to remove slack in the region of attachment between a leg section and the base section. For example, the 3D woven structure may be provided with bottom fiber tows 260a and 260b (or other similar material) that can be pulled (e.g., downward in the view shown in Fig. 4) to remove slack in the through-the-thickness tow regions. The removal of the slack will reduce any spacing between the leg sections and the base sections thereby increasing the strength of the overall 3D woven fiber structure. Furthermore, if the presence of the through-the-thickness tow regions leads to a high volume fraction (Vf), the volume fraction can be reduced by removing some portion of warp tows, e.g., sections 270, in the region wherein the leg sections and base section are connected.

In general, the through-the-thickness tow regions increase the strength of the overall structure, e.g., a π-shaped structure, by providing strong anchoring of the leg sections to the base sections. Further, these through-the-thickness tow regions improve thermal conductivity between the bottom surface of base section and the top surface of base section, as well as between the bottom surface of base section and the leg sections.

After the leg sections are positioned to form, for example, a π-shape, as described above, the preform, e.g., a ceramic preform, can be subjected to densification, through the introduction of a matrix material into the preform, i.e., to form a CMC. Densification can be performed by, for example, chemical vapor infiltration (CVI). CVI is a known technique to form matrices for fiber-reinforced material such as CMCs. In this technique, a heated gaseous matrix precursor infiltrates the porous fibrous preform and reacts with the fibers of the preform thereby forming a matrix around the fibers. Densification can also be performed by any of the known methods of densification including polymer infiltration and pyrolysis (PIP), reactive melt infiltration (RMI), slurry infiltration, and sol-gel infiltration.

The corresponding structures, material, acts, and equivalents of all means or steps plus function elements in the claims below are intended to include any structure, material, or act for performing the function in combination with other claimed elements are specifically claimed. The description of the embodiments described herein has been presented for purposes of illustration and description, but is not intended to be exhaustive or limited to the invention in the form disclosed. Many modifications and variations will be apparent to those of ordinary skill without departing from the scope and spirit of the invention. The embodiments were chosen and described in order to best explain the principles of the invention and the practical application, and to enable others of ordinary skill in the art to understand the invention for embodiments with various modifications as are suited to the particular use contemplated.

Modifications and equivalents may be made to the features of the claims without departing from the spirit or scope of the invention. Thus, it is intended that the embodiments described herein covers the modifications and variations disclosed above provided that these changes come within the scope of the claims and their equivalents.

## Claims

1. A fiber preform (200) comprising:
a base section (210) comprising a bottom surface (211), a top surface (212) opposite said bottom surface (211), a first end surface (213), and a second end surface (214) opposite to said first end surface (213), said base section (210) having a thickness defined as the distance between said bottom surface (211) and said top surface (212) and a length defined as the distanced between said first end surface (213) and said second end surface (214),
one or more leg sections (220a, 220b) positioned above said top surface (212) of said base section (210), wherein each leg section (220a, 220b) has a first side surface (221a, 221b), a second side surface (222a, 222b), first end surface (223a, 223b), and a second end surface (224a, 224b),
wherein said base section (210) and said one or more leg sections (220a, 220b) together are a made of a single three-dimensional woven fiber structure comprising layers of warp fiber tows, the warp tows of adjacent layers being arranged in columns, and a plurality of weft fiber tows that interlink the layers of warp tows to provide a three-dimensional weave, wherein the woven fiber structure includes connecting weft tow sections that connect the base section (210) to each of said one or more leg sections (220a, 220b) and the connecting weft tow sections include through-the-thickness tow regions that pass from a leg section (220a, 220b) through the thickness (height) of the base section (210).

2. The fiber preform (200) according to claim 1, wherein each of said one or more leg sections (220a, 220b) is positioned perpendicular to the top surface (212) of said base section (210) with the first end surface (223a, 223b) of each leg section (220a, 220b) being positioned adjacent and parallel to the top surface (212) of said base section (210).

3. The fiber preform (200) according to claim 1 or 2, wherein said preform (200) has two leg sections (220a, 220b) and each of said leg sections (220a, 220b) is positioned perpendicular to the top surface (212) of said base section (210) with the first end surface (223a, 223b) of each leg section (220a, 220b) being positioned adjacent and parallel to the top surface (212) of said base section (210) to form a π-shaped structure.

4. The fiber preform (200) according to claim 1, 2 or 3, wherein the tows are made from material selected from silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbide (SiBC), silicon borocarbonitride (SiBCN), and silicon aluminum carbon nitride (SiAlCN).

5. The fiber preform (200) according to claim 1, 2 or 3, wherein the tows are made from silicon carbide (SiC).

6. A method of preparing a fiber preform (200), said method comprising:
(a) providing a first plurality of adjacent layers of warp fiber tows to form a base section (210) wherein the warp tows of adjacent layers are arranged in vertical columns, and providing a second plurality of adjacent layers of warp tows to form a leg section (220a) wherein the warp tows of adjacent layers are arranged in vertical columns, and
(b) weaving a plurality of weft fiber tows through said base section (210) and said leg section (220a) to form a single three-dimensional woven fiber structure comprising said base section (210) and said leg section (220a),
wherein said base section (210) comprises a bottom surface (211), a top surface (212) opposite said bottom surface (211), a first end surface (213), and a second end surface (214) opposite to said first end surface (213), said base section (210) having a thickness defined as the distance between said bottom surface (211) and said top surface (212) and a length defined as the distance between said first end surface (213) and said second end surface (214),
wherein said leg section (220a) is positioned above said top surface (212) of said base section (210), wherein said leg section (220a) has a first side surface (221a), a second side surface (222a), first end surface (223a), and a second end surface (224a), and
wherein the three-dimensional woven fiber structure includes connecting weft tow sections, that connect the base section (210) to the leg section (220a), wherein the connecting weft tow sections include through-the-thickness tow regions that pass from a leg section (220a) through the thickness (height) of the base section (210).

7. The method according to claim 6, further comprising positioning said leg section (220a) to be perpendicular to the top surface (212) of said base section (210) with the first end surface (223a) of said leg section (220a) being positioned adjacent and parallel to the top surface (212) of said base section (210).

8. The method according to claim 6, further comprising:
in (a) providing a third plurality of adjacent layers of warp tows to form a further leg section (220b) wherein the warp tows of adjacent layers are arranged in columns,
in (b) weaving a plurality of weft tows through said third plurality of adjacent layers of warp tows wherein the single three-dimensional woven fiber structure comprises said base section (210), said leg section (220a), and said further leg section (220b),
wherein said further leg section (220b) is positioned above said top surface (212) of said base section (210), and said further leg section (220b) has a first side surface (221b), a second side surface (222b), first end surface (223b), and a second end surface (224b), and
wherein the three-dimensional woven fiber structure includes connecting weft tow sections that connect the base section (210) to the further leg section (220b), wherein the connecting weft tow sections that connect the base section (210) to the further leg section (220b) include through-the-thickness tow regions that pass from the further leg section (220b) through the thickness (height) of the base section (210).

9. The method according to claim 8, further comprising positioning said leg section (220a) and said further leg section (220b) to be perpendicular to the top surface (212) of said base section (210) with the first end surface (223a, 223b) of each of said leg section (220a) and said further leg section (220b) being positioned adjacent and parallel to the top surface (212) of said base section (210).

10. The method according to any of claims 6 to 9, further comprising removing slack within the through-the-thickness tow regions.

11. The method according to any of claims 6 to 10, wherein the fibers are made from material selected from silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbide (SiBC), silicon borocarbonitride (SiBCN), and silicon aluminum carbon nitride (SiAlCN).

12. A method of preparing ceramic matrix composite (CMC) comprising:
(a) forming a ceramic matrix composite preform (200) by:
(i) providing a first plurality of adjacent layers of warp fiber tows to form a base section (210) wherein the warp tows of adjacent layers are arranged in columns, and providing a second plurality of adjacent layers of warp fiber tows to form a leg section (220a) wherein the warp tows of adjacent layers are arranged in vertical columns,
(ii) weaving a plurality of weft fiber tows through said first plurality of adjacent layers of warp tows and weaving a plurality of weft fiber tows through said second plurality of adjacent layers of warp tows to form a single three-dimensional woven fiber structure comprising said base section (210) and said leg section (220a),
wherein said base section (210) comprises a bottom surface (211), a top surface (212) opposite said bottom surface (211), a first end surface (213), and a second end surface (214) opposite to said first end surface (213), said base section (210) having a thickness defined as the distance between said bottom surface (211) and said top surface (212) and a length defined as the distance between said first end surface (213) and said second end surface (214),
wherein said leg section (220a) is positioned above said top surface (212) of said base section (210), wherein said leg section (220a) has a first side surface (221a), a second side surface (222a), first end surface (223a), and a second end surface (224a), and
wherein the three-dimensional woven fiber structure includes connecting weft tow sections, that connect the base section (210) to the leg section (220a), wherein the connecting weft tow sections include through-the-thickness tow regions that pass from a leg section (220a) through the thickness (height) of the base section (210);
(b) positioning said leg section (220a) of the preform (200) to be perpendicular to the top surface (212) of said base section (210) wherein the first end surface (223a) of said leg section (220a) is positioned adjacent and parallel to the top surface (212) of said base section (210);
(c) removing slack within the through-the-thickness tow regions; and
(d) densifying the preform (200) to form said ceramic matrix composite.

13. The method according to claim 12, further comprising:
in (i) providing a third plurality of adjacent layers of warp tows to form a further leg section (220b) wherein the warp tows of adjacent layers are arranged in columns,
in (ii) weaving a plurality of weft tows through said third plurality of adjacent layers of warp tows wherein the single three-dimensional woven fiber structure comprises said base section (210), said leg section (220a), and said further leg section (220b),
wherein said further leg section (220b) is positioned above said top surface (212) of said base section (210), and said further leg section (220b) has a first side surface (221b), a second side surface (222b), first end surface (223b), and a second end surface (224b), and
wherein the three-dimensional woven fiber structure includes connecting weft tow sections that connect the base section (210) to the further leg section (220b), wherein the connecting weft tow sections that connect the base section (210) to the further leg section (220b) include through-the-thickness tow regions that pass from the further leg section (220b) through the thickness (height) of the base section (210).

14. The method according to claim 12 or 13, wherein the fibers are made from material selected from silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbide (SiBC), silicon borocarbonitride (SiBCN), and silicon aluminum carbon nitride (SiAlCN).

15. A ceramic matrix composite prepared by the method of claim 12, 13 or 14.
